(19) Europäisches Patentamt
European Patent Office
Office européen des brevets

(11) EP 4 773 026 A1

(12) **EUROPEAN PATENT APPLICATION**
published in accordance with Art. 153(4) EPC

(43) Date of publication:
08.07.2026 Bulletin 2026/28

(21) Application number: 24864207.6

(22) Date of filing: 28.06.2024

(51) International Patent Classification (IPC):
*G06F 18/213* (2023.01) *G01M 13/00* (2019.01)
*G01M 13/04* (2019.01) *G01M 13/045* (2019.01)

(86) International application number:
PCT/CN2024/102589

(87) International publication number:
WO 2025/055482 (20.03.2025 Gazette 2025/12)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 14.09.2023 CN 202311196883

(71) Applicant: Dongfeng Motor Group Co., Ltd.
Wuhan, Hubei 430000 (CN)

(72) Inventors:
• WANG, Dongxiong
Wuhan, Hubei 430000 (CN)

• ZHOU, Kun
Wuhan, Hubei 430000 (CN)
• YU, Zewen
Wuhan, Hubei 430000 (CN)
• GUO, Jun
Wuhan, Hubei 430000 (CN)
• WANG, Ying
Wuhan, Hubei 430000 (CN)

(74) Representative: Lohmanns Lohmanns & Partner mbB
Benrather Schlossallee 49-53
40597 Düsseldorf (DE)

(54) **METHOD AND APPARATUS FOR DETERMINING ROTOR STATE, ELECTRONIC DEVICE, AND COMPUTER STORAGE MEDIUM**

(57) Disclosed in embodiments of the present application are a method and apparatus for determining a rotor state, an electronic device, and a computer storage medium. The rotor comprises N equivalent units; each equivalent unit comprises a disc and a beam; and at least one equivalent unit comprises a bearing. The method comprises: on the basis of a stress state of an i-th disc, determining an i-th disc matrix that characterizes a relationship between state vectors at two ends of the i-th disc, wherein the stress of the i-th disc comprises: a shear force, and an elastic force and a damping force generated by the bearing, $N \geq 2$, and $N \geq i \geq 1$, N and i being integers; on the basis of a bending deformation formula of an i-th beam, determining an i-th beam matrix that characterizes a relationship between state vectors at two ends of the i-th beam; on the basis of the i-th disc matrix and the i-th beam matrix, determining a state relationship between two ends of an i-th equivalent unit; on the basis of a Likati Riccati transformation relationship and the state relationship between the two ends of the i-th equivalent unit, determining state vectors of the N equivalent units that characterize a state of the rotor.

determining an i-th disk matrix according to a force condition of the i-th disk; wherein the i-th disk matrix characterizes a relationship between state vectors at two ends of the i-th disk; the forces borne by the i-th disk comprise: a shear force, and a supporting force generated by a bearing in an equivalent unit to which the i-th disk pertains; $N \geq 1$; and i is an integer — S101

determining an i-th beam matrix according to a bending deformation formula of the i-th massless beam; wherein the i-th beam matrix is configured to characterize a relationship between state vectors at two ends of the i-th beam — S102

determining a state relationship at two ends of an i-th equivalent unit according to the i-th disk matrix and the i-th beam matrix; — S103

determining state vectors of the N equivalent units based on a Riccati transformation relationship and the state relationship at the two ends of the i-th equivalent unit; wherein the state vectors of the N equivalent units are configured to characterize the rotor state — S104

Fig. 1

EP 4 773 026 A1

## Description

### Related Application

The present application claims priority to Chinese Patent Application No. 202311196883.3, filed on September 14, 2023, the entire contents of which are incorporated herein by reference.

### Field of the Invention

The present application relates to the technical field of motors, and in particular to a method and apparatus for determining a rotor state, an electronic device, and a computer storage medium.

### Background of the Invention

In order to enable high-speed motors to operate safely and reliably, it is generally necessary to predict the vibration modes of the rotor system. Currently, the rolling bearings supporting the rotor have low damping, so the damping of the bearings is often neglected in such predictions. However, rotor system increasingly employs oil lubrication and electromagnetic damping devices to suppress rotor vibrations, both of which make the support damping of the rotor system increasingly non-negligible. Therefore, neglecting the support damping may result in low accuracy in predicting the vibration modes of the rotor.

### Summary of the Invention

The embodiment of the present application provides a method and apparatus for determining a rotor state, an electronic device, and a computer storage medium, which takes into account the influence of support damping on the rotor and improves the accuracy of determining the rotor state.

The technical solutions in the present application are implemented as follows.

The embodiment of the present application provides a method for determining a rotor state, and the rotor comprises N equivalent units; each of the equivalent units comprises a disk and a beam; at least one of the equivalent units comprises a bearing; $N \geq 2$; and N is a positive integer; and the method comprises:

determining an i-th disk matrix according to a force condition of the i-th disk; wherein the i-th disk matrix characterizes a relationship between state vectors at two ends of the i-th disk; the forces borne by the i-th disk comprise: a shear force, and a supporting force generated by the bearing in the equivalent unit to which the i-th disk pertains; $N \geq i \geq 1$; and i is an integer; determining an i-th beam matrix according to a bending deformation formula of the i-th beam; wherein the i-th beam matrix is configured to characterize a relationship between state vectors at two ends of the i-th beam; determining a state relationship at two ends of an i-th equivalent unit according to the i-th disk matrix and the i-th beam matrix; and determining state vectors of the N equivalent units based on a Riccati transformation relationship and the state relationship at the two ends of the i-th equivalent unit; wherein the state vectors of the N equivalent units are configured to characterize the rotor state.

The embodiment of the present application further provides an apparatus for determining a rotor state, and the rotor comprises N equivalent units; each of the equivalent units comprises a disk and a beam; at least one of the equivalent units comprises a bearing; $N \geq 2$, and N is a positive integer; and the apparatus comprises:

a determination module, which is configured to determine an i-th disk matrix according to a force condition of the i-th disk; wherein the i-th disk matrix characterizes a relationship between state vectors at two ends of the i-th disk; the forces borne by the i-th disk comprise: a shear force, and a supporting force generated by the bearing in the equivalent unit to which the i-th disk pertains; $N \geq i \geq 1$; and i is an integer; the determination module is further configured to determine an i-th beam matrix according to a bending deformation formula of the i-th beam; wherein the i-th beam matrix is configured to characterize a relationship between state vectors at two ends of the i-th beam; the determination module is further configured to determine a state relationship at two ends of an i-th equivalent unit according to the i-th disk matrix and the i-th beam matrix; and the determination module is further configured to determine state vectors of the N equivalent units based on a Riccati transformation relationship and the state relationship at the two ends of the i-th equivalent unit; wherein the state vectors of the N equivalent units are configured to characterize the rotor state.

The embodiment of the present application provides an electronic device, which comprises:

a memory, which is configured to store a computer program; and

a processor, which is configured to execute the above method for determining the rotor state when the computer program is executed.

The embodiment of the present application provides a computer storage medium, wherein executable instructions are stored thereon and are configured to implement the above method for determining the rotor state when executed by a processor.

The embodiments of the present application provide a method and apparatus for determining a rotor state, an electronic device, and a computer storage medium, for a disk in any equivalent unit, a supporting force generated by a bearing is taken into account, and the supporting force comprises an elastic force corresponding to a stiffness coefficient and a damping force corresponding to a damping coefficient; and accordingly, since the influence of the damping force on the rotor is taken into account during rotor state prediction, the accuracy of determining the rotor state is improved.

**Brief Description of the Drawings**

Fig. 1 is a flowchart of a method for determining a rotor state in the embodiment of the present application;

Fig. 2 is a structural diagram of a rotor in the embodiment of the present application;

Fig. 3 is structural diagram of a rotor assembly in the embodiment of the present application;

Fig. 4 is a structural diagram of an equivalent model of a rotor in the embodiment of the present application;

Fig. 5 is a structural diagram of an equivalent unit in the embodiment of the present application;

Fig. 6a is a schematic diagram of forces and moments acting on a disk in the embodiment of the present application;

Fig. 6b is a schematic diagram of bending moments of a beam in the embodiment of the present application;

Fig. 7 is a flowchart of a method for determining a rotor state in the embodiment of the present application;

Figs. 8a-8f are schematic diagrams of mode shapes of a rotor in the embodiment of the present application;

Fig. 9 is a schematic diagram of a variation curve of a damped critical speed with damping in the embodiment of the present application;

Fig. 10 is a schematic diagram of a variation curve of a logarithmic decrement with damping in the embodiment of the present application;

Figs. 11a and 11b are schematic diagrams illustrating variation trends of rotor displacement over time in the embodiment of the present application;

Fig. 12 is a structural diagram of an apparatus for determining a rotor state in the embodiment of the present application;

Fig. 13 is a hardware structural diagram of an electronic device in the embodiment of the present application.

**Detailed Description of the Embodiments**

In order to make the objectives, technical solutions, and advantages of the present application more apparent, the present application will be further described in detail below with reference to the accompanying drawings, the described embodiments should not be construed as limiting the present application, and all other embodiments obtained by those skilled in the art without inventive effort shall fall within the protection scope of the present application.

In the following description, reference to "some embodiments" describes a subset of all possible embodiments. It should be understood that "some embodiments" may refer to the same or different subsets of all possible embodiments, and may be combined with each other without conflict.

In the following description, the terms "first," "second," and "third" are used merely to distinguish similar objects and do not imply any particular order. It should be understood that "first," "second," and "third" may be interchanged in a specific order or sequence where permitted, so that the embodiments of the present application described herein can be implemented in an order other than that illustrated or described.

Unless otherwise defined, all technical and scientific terms used herein have the same meaning as commonly understood by those skilled in the art to which the present application pertains. The terminology used herein is for the purpose of describing the embodiments of the present application only and is not intended to limit the present application.

For ease of understanding the present application, the background of the embodiments of the present application is described before describing the embodiments.

In high-speed motors, an oil-cooling system may be employed to improve motor cooling and increase power density; and the oil-cooling system can provide oil lubrication for bearings supporting the rotor, improving lubrication conditions, and at the same time provides support damping for the rotor system, thereby improving the dynamic characteristics of the rotor system. In addition, in order to suppress vibrations of the rotor system or to actively control vibrations of high-performance rotor systems, an electromagnetic damping device needs to be installed for high-speed rotor systems in specific applications, and such device also provides support damping for the rotor system. In the related art, ignoring the effect of support damping on the rotor state can result in inaccurate determination of the rotor state and low accuracy in predicting the critical speed of the rotor system.

The embodiments of the present application provide a method and apparatus for determining a rotor state, an electronic device, and a computer storage medium, which take into account the effect of support damping on the rotor state, thereby improving the accuracy of determining the rotor state. The following describes exemplary applications of the rotor state determination apparatus provided by the embodiments of the present application. The rotor state determination apparatus according to the embodiments of the present application can be implemented as various types of user terminals, such as a notebook computer, a tablet computer, a desktop computer, a set-top box, or a mobile device (e.g., a mobile phone, a portable music player, a personal digital assistant, a dedicated messaging device, or a portable game device).

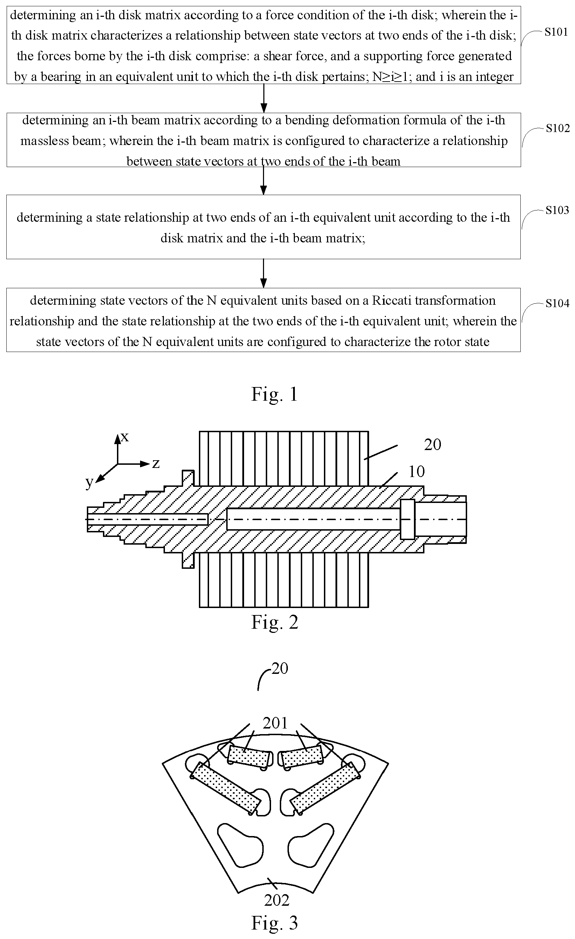

As shown in Fig. 1, Fig. 1 is a flowchart of a method for determining a rotor state in the embodiment of the present application, which will be described below with reference to S101-S104. The rotor comprises N equivalent units; each of the equivalent units comprises a disk and a beam; at least one of the equivalent units comprises a bearing; $N \geq 2$; and N is a positive integer.

S101. An i-th disk matrix is determined according to a force condition of the i-th disk; wherein the i-th disk matrix characterizes a relationship between state vectors at two ends of the i-th disk; the forces borne by the i-th disk comprise: a shear force, and a supporting force generated by the bearing in the equivalent unit to which the i-th disk pertains; $N \geq i \geq 1$; and i is an integer.

Fig. 2 shows a structural diagram of a rotor in the embodiment of the present application, and a cross-sectional view of the rotor in an xz plane is illustrated in Fig. 2. The rotor comprises a rotating shaft 10 and a rotor assembly 20, and the rotating shaft 10 is parallel to a z-axis. Fig. 3 shows a structural diagram of a rotor assembly in the embodiment of the present application, and as shown in Fig. 3, the rotor assembly 20 comprises at least a permanent magnet 201 and a rotor component 202. Based on the principle of invariance of the center of mass and in combination with the inherent structure of the rotor, the rotor can be equivalently modeled as a rotor system model, and the equivalent rotor comprises bearings, N disks, and (N-1) elastic beams; $N \geq 2$, and N is an integer; and a massless elastic beam is disposed between every two adjacent disks, and the number of the bearings is equal to that of the bearings in the actual rotor. Some of the N disks located near the central region, as well as the elastic beams between these disks, comprise not only the rotating shaft but also the rotor assembly 20; and the positions of the disks that comprise the rotor assembly are determined based on the structure of the rotor itself. It should be noted that the equivalent model of the rotor can be divided into N equivalent units, each equivalent unit comprises a disk and a beam; at least one equivalent unit can further comprise a bearing.

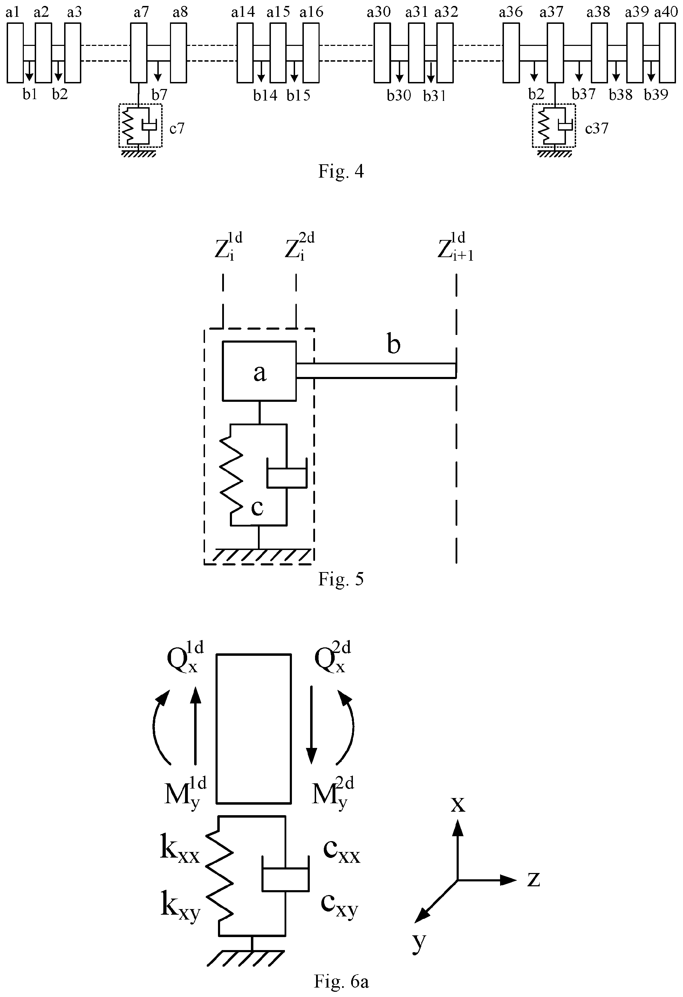

By way of example, Fig. 4 shows a structural diagram of an equivalent model of a rotor in the embodiment of the present application. As shown in Fig. 4, the rotor with two bearings can be equivalently represented by 40 disks a1-a40, 39 beams b1-b39, and 2 bearings c7 and c37. Bearing c7 is located at disk a7, and bearing c37 is located at disk a37; and disks a15-a31 and beams b15-b30 comprise the rotor assembly.

It should be noted that, at any given moment, the acceleration of the vibration of the disk is determined by the forces acting on the disk at that moment, and the forces herein comprises both force and moment. The forces acting on the disk comprise a shear force and a supporting force generated by the bearing in the equivalent unit to which the disk pertains; and the supporting force comprises an elastic force and a damping force.

In the embodiments of the present application, the elastic force is generated based on a stiffness coefficient, and the damping force is generated based on a damping coefficient. If an equivalent unit does not comprise the bearing, both the stiffness coefficient and the damping coefficient are zero, and thus the supporting force acting on the disk in that equivalent unit is zero.

By way of example, Fig. 5 shows a structural diagram of an equivalent unit. As shown in Fig. 5, the equivalent unit comprises a disk a, a beam b, and a bearing c.

In the embodiments of the present application, the state of the equivalent unit can be represented by a state variable Z, as shown in Equation (1).

$$Z = |Z| e^{st} \qquad \text{Equation (1)}$$

$s$ is referred to as the complex frequency of the rotor system, as shown in Equation (2).

$$s = \sigma + j\omega \qquad \text{Equation (2)}$$

$\omega$ (rad/s) represents the natural frequency, and $\sigma$ (rad/s) represents the damping index; the value of the damping index can indicate the attenuation or growth of vibration; wherein a damping index less than 0 indicates that the vibration amplitude decays, whereas a damping index greater than 0 indicates that the vibration amplitude increases. It should be noted that when the damping index is less than 0, the vibration amplitude of the rotor decreases exponentially over time, indicating that the rotor system is stable; and when the damping index is greater than 0, the rotor system is unstable.

In the embodiments of the present application, in order to further quantify the stability of the system, a logarithmic decrement $\delta$ is adopted to indicate the stability margin of the rotor system, as shown in Equation (3).

$$\delta = -\frac{2\pi\sigma}{\omega} \qquad \text{Equation (3)}$$

The logarithmic decrement $\delta$ greater than 0 indicates that the rotor system is stable, whereas the logarithmic decrement $\delta$ less than 0 indicates that the rotor system is unstable. When the logarithmic decrement is greater than 0 and exceeds 1, the vibration amplitude of the rotor decays more rapidly, and the rotor modes are significantly suppressed, indicating stronger stability. The logarithmic decrement $\delta$ herein of 0 corresponds to the motion speed that defines the instability threshold of the system.

In the embodiments of the present application, the state variable Z comprises internal force parameters $f$ and deformation parameters $\varepsilon$, both of which vary over time.

$$Z = \{f \quad \varepsilon\} \qquad \text{Equation (4)}$$

The internal force parameters $f$ comprise bending moment $M$ and shear force $Q$, as shown in Equation (5); and the deformation parameters $\varepsilon$ comprises linear displacement $X$ and angular displacement $\theta$, as shown in Equation (6).

$$f = \{M \quad Q\}^T \qquad \text{Equation (5)}$$

$$\varepsilon = \{X \quad \theta\}^T \qquad \text{Equation (6)}$$

In some embodiments of the present application, the state vectors of the disk comprise: a disk angular displacement, a disk bending moment, a disk linear displacement, and a disk shear force; the relationship between the state vectors at the two ends of the i-th disk comprises a first disk state relationship and a second disk state relationship; the electronic device can determine the first disk state relationship according to the forces borne by the i-th disk; and the first disk state relationship characterizes a relationship among the disk linear displacement, the disk shear force at a first end, and the disk shear force at a second end.

In the embodiment of the present application, the first end of the disk along the bearing direction is subjected to a first disk shear force, i.e., the disk shear force at the first end; the second end is subjected to a second disk shear force, i.e., the disk shear force at the second end. The linear displacement in the bearing direction corresponds to an elastic force, and the velocity in the bearing direction corresponds to a damping force. According to Newton's second law, the resultant force in the bearing direction, comprising the first disk shear force, the second disk shear force, the elastic force, and the damping force, can generate acceleration.

The linear velocity of the disk vibration is the first derivative of the linear displacement, and the linear acceleration is the second derivative of the linear displacement. The angular velocity of the disk vibration is the first derivative of the angular displacement, and the angular acceleration is the second derivative of the angular displacement. Equation (7) can be obtained through taking the first derivative of Equation (2), and Equation (8) can be obtained through taking the second derivative of Equation (2).

$$\dot{Z} = sZ \qquad \text{Equation (7)}$$

$$\ddot{Z} = s^2 Z \qquad \text{Equation (8)}$$

As can be seen from Equations (7) and (8), both the damping force acting on the disk and the acceleration of the vibration can be determined based on the linear displacement in the state variable of the disk. Accordingly, the relationship between the first disk shear force $Q_X^{1d}$ and the second disk shear force $Q_X^{2d}$ can be determined based on the mass $m$ of the disk, the complex frequency $s$, the linear displacement $X$, the stiffness coefficient $k$, and the damping coefficient $c$, as shown in Equation (9).

$$Q_X^{2d} = Q_X^{1d} - F_1(m,s,c,k)X \qquad \text{Equation (9)}$$

In some embodiments of the present application, the first disk state relationship comprises the first disk state relationship in a first direction and the first disk state relationship in a second direction; the first direction and the second direction are perpendicular to each other, and both the first direction and the second direction are perpendicular to the bearing of the rotor; the electronic device can adopt the disk shear force at the second end in the first direction, the mass of the disk, a first stiffness parameter and a first damping parameter in the first direction affecting the first direction, a second stiffness parameter and a second damping parameter in the first direction affecting the second direction, the disk linear displacement in the first direction, the disk linear displacement in the second direction, and a complex frequency of the rotor to characterize the disk shear force at the first end in the first direction; and the electronic device can adopt the disk shear force at the second end in the second direction, a third stiffness parameter and a third damping parameter in the second direction affecting the second direction, a fourth stiffness parameter and a fourth damping parameter in the second direction affecting the first direction, the disk linear displacement in the first direction, the disk linear displacement in the second direction, and the complex frequency of the rotor to characterize the disk shear force at the first end in the second direction; and in the absence of the bearing in the equivalent unit, the first stiffness parameter, the second stiffness parameter, the third stiffness parameter, the fourth stiffness parameter, the first damping parameter, the second damping parameter, the third damping parameter, and the fourth damping parameter are all zero.

In the embodiment of the present application, the bearing direction is the z-axis direction, the first direction is the x-axis direction, and the second direction is the y-axis direction. According to Newton's second law, the force acting on the i-th disk in the x-axis direction can be expressed by Equation (10), and the force acting on the i-th disk in the y-axis direction can be expressed by Equation (11).

$$m\ddot{x} = -k_{xx}x - c_{xx}\dot{x} - k_{xy}y - c_{xy}\dot{y} + Q_x^{1d} - Q_x^{2d} \qquad \text{Equation (10)}$$

$$m\ddot{y} = -k_{yy}y - c_{yy}\dot{y} - k_{yx}y - c_{yx}\dot{x} + Q_y^{1d} - Q_y^{2d} \qquad \text{Equation (11)}$$

$x$ denotes the linear displacement in the x-axis direction, and $y$ denotes the linear displacement in the y-axis direction; $k_{xx}$ denotes the first stiffness parameter in the x-axis direction that affects the x-axis direction, and $c_{xx}$ denotes the first damping parameter in the x-axis direction that affects the x-axis direction; $k_{xy}$ denotes the second stiffness parameter in the x-axis direction that affects the y-axis direction, and $c_{xy}$ denotes the second damping parameter in the x-axis direction that affects the y-axis direction; and $Q_x^{1d}$ denotes the disk shear force at the first end in the x-axis direction, and $Q_x^{2d}$ denotes the disk shear force at the second end in the x-axis direction. $k_{yy}$ denotes the third stiffness parameter in the y-axis direction that affects the y-axis direction, and $c_{yy}$ denotes the third damping parameter in the y-axis direction that affects the y-axis direction; and $k_{yx}$ denotes the fourth stiffness parameter in the y-axis direction that affects the x-axis direction, and $c_{yx}$ denotes the fourth damping parameter in the y-axis direction that affects the x-axis direction; and $Q_y^{1d}$ denotes the disk shear force at the first end in the y-axis direction, and $Q_y^{2d}$ denotes the disk shear force at the second end in the y-axis direction.

Equation (12) can be obtained through representing Equation (10) in the form of Equation (9); and Equation (13) can be obtained through representing Equation (11) in the form of Equation (9).

$$Q_x^{2d} = Q_x^{1d} - \left(ms^2 + c_{xx}s + k_{xx}\right)x - \left(c_{xy}s + k_{xy}\right)y \qquad \text{Equation (12)}$$

$$Q_y^{2d} = Q_y^{1d} - \left(ms^2 + c_{yy}s + k_{yy}\right)y - \left(c_{yx}s + k_{yx}\right)x \qquad \text{Equation (13)}$$

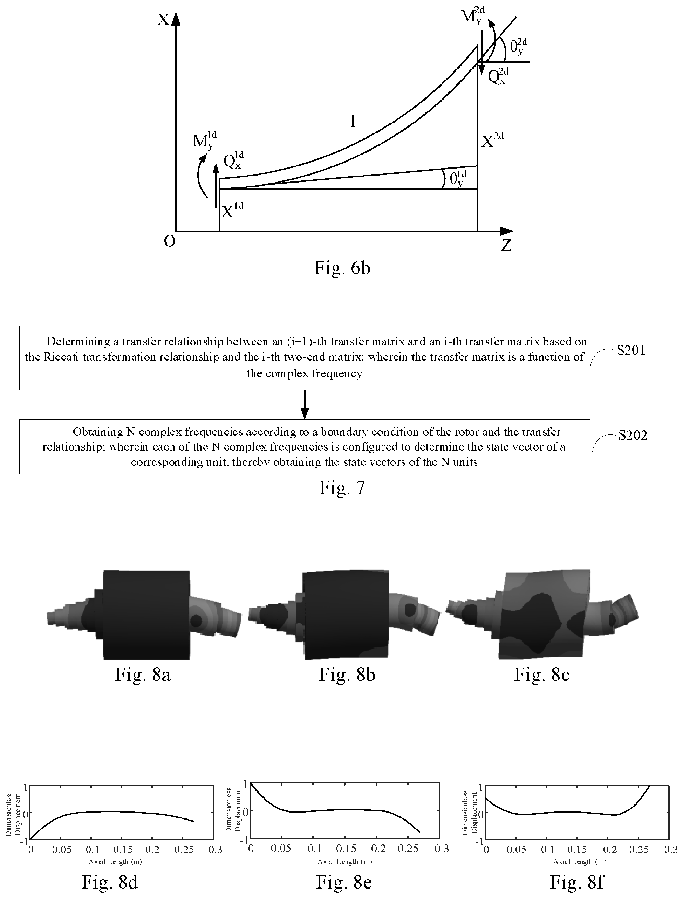

Based on Fig. 5, Fig. 6a shows a schematic diagram illustrating forces and moments acting on a disk in the equivalent element; as shown in Fig. 6, the first end of disk a along the x-axis direction is subjected to the disk shear force at the first end $Q_x^{1d}$, and the second end is subjected to the disk shear force at the second end $Q_x^{2d}$; and the disk shear force at the first end $Q_x^{1d}$ corresponds to the disk bending moment at the first end, denoted as $M_y^{1d}$, and the disk shear force at the second end $Q_x^{2d}$ corresponds to the disk bending moment at the second end, denoted as $M_y^{2d}$. $k_{xx}$ and $k_{xy}$ are stiffness parameters in the x-axis direction that generate elastic forces, and $c_{xx}$ and $c_{xy}$ are damping parameters in the x-axis direction that generate resistive forces.

In some embodiments of the present application, the electronic device can determine the second disk state relationship according to moments of the i-th disk; and the second disk state relationship characterizes a relationship among the disk angular displacement, the disk bending moment at the first end, and the disk bending moment at the second end.

In the embodiment of the present application, the moments of the disk comprise the disk bending moment at the first end, the disk bending moment at the second end, and a torque. The torque is determined based on the disk moment of inertia, angular acceleration, and angular velocity. As can be seen from Equations (7) and (8), the torque of the disk can be determined from the angular displacement in the state variable of the disk. Accordingly, the relationship between the disk bending moment at the first end and the disk bending moment at the second end can be determined based on the disk spin speed $\Omega$, the complex frequency $s$, the angular displacement $\theta$, and the disk moment of inertia $J$, as shown in Equation (14). The moment of inertia herein can comprise the diametral moment of inertia and the polar moment of inertia.

$$M_X^{2d} = M_X^{1d} + F_2(J, s, \Omega)\theta \qquad \text{Equation (14)}$$

In some embodiments of the present application, the second disk state relationship comprises the second disk state relationship in a first direction and the second disk state relationship in a second direction; the first direction and the second direction are perpendicular to each other, and both the first direction and the second direction are perpendicular to the bearing of the rotor; the electronic device can adopt the disk bending moment at the second end in the second direction, the diametral moment of inertia, the polar moment of inertia, the spin speed, the disk angular displacement in the second direction, the disk angular displacement in the first direction, and a complex frequency of the rotor to characterize the disk bending moment at the first end in the second direction; and the electronic device can adopt the disk bending moment at the second end in the first direction, the diametral moment of inertia, the polar moment of inertia, the spin speed, the disk angular displacement in the first direction, the disk angular displacement in the second direction, and the complex frequency of the rotor to characterize the disk bending moment at the first end in the first direction.

In the embodiment of the present application, the bearing direction is the z-axis direction, the first direction is the x-axis direction, and the second direction is the y-axis direction. According to the bending deformation formula, the moment of the i-th disk in the x-axis direction can be expressed by Equation (15), and the moment of the i-th disk in the y-axis direction can be expressed by Equation (16).

$$J_d\left(-\ddot{\theta}_x\right) - J_p\Omega\left(-\dot{\theta}_y\right) = M_x^{2d} - M_x^{1d} \qquad \text{Equation (15)}$$

$$J_d\ddot{\theta}_y + J_p\Omega\left(-\dot{\theta}_x\right) = M_y^{2d} - M_y^{1d} \qquad \text{Equation (16)}$$

$J_d$ denotes the diametral moment of inertia, and $J_p$ denotes the polar moment of inertia; $\theta_x$ denotes the disk angular displacement in the first direction, and $\theta_y$ denotes the disk angular displacement in the second direction.

Based on Fig. 5, Fig. 6b shows a schematic diagram illustrating the torque of a beam in an equivalent unit; as shown in Fig. 6b, at the first end of beam a along the x-axis direction, the disk bending moment is $M_y^{1d}$, the linear displacement is $X^{1d}$, and the angular displacement is $\theta_y^{1d}$; and at the second end of beam b, the disk bending moment is $M_y^{2d}$, the linear displacement is $X^{2d}$, and the angular displacement is $\theta_y^{2d}$.

Equation (17) can be obtained through representing Equation (15) in the form of Equation (14); and Equation (18) can be obtained through representing Equation (16) in the form of Equation (14).

$$M_x^{2d} = M_x^{1d} + J_d s^2 \theta_x + J_p \Omega s \theta_y \qquad \text{Equation (17)}$$

$$M_y^{2d} = M_y^{1d} + J_d s^2 \theta_y - J_p \Omega s \theta_x \qquad \text{Equation (18)}$$

Based on Equations (12), (13), (17), and (18), the electronic device can represent the relationship between the state vectors at both ends of the i-th disk through the i-th disk matrix $D_i$, as shown in Equation (19).

$$Z_{ai}^{2d} = \left\{ \begin{matrix} f \\ \varepsilon \end{matrix} \right\}_a^{2d} = \begin{bmatrix} D_{11} & D_{12} \\ D_{21} & D_{22} \end{bmatrix}_i \left\{ \begin{matrix} f \\ \varepsilon \end{matrix} \right\}_a^{1d} = D_i Z_{ai}^{1d} \qquad \text{Equation (19)}$$

wherein

$$D_{11} = D_{22} = I_{4\times4} \qquad \text{Equation (20)}$$

$$D_{21} = O_{4\times4} \qquad \text{Equation (21)}$$

$$D_{12} = \begin{bmatrix} 0 & J_d s^2 & 0 & -J_p \Omega s \\ -ms^2 - c_{xx}s - k_{xx} & 0 & -c_{xy}s - k_{xy} & 0 \\ 0 & J_p \Omega s & 0 & J_d s^2 \\ -c_{yx}s - k_{yx} & 0 & -ms^2 - c_{yy}s - k_{yy} & 0 \end{bmatrix} \qquad \text{Equation (22)}$$

S102. An i-th beam matrix is determined according to a bending deformation formula of the i-th beam; and the i-th beam matrix is configured to characterize a relationship between state vectors at two ends of the i-th beam.

In the embodiment of the present application, under vibrational conditions of the rotor, the equivalent beam can perform bending deformation and displacement at any given moment, and according to the bending deformation formula, the relationship between the state vectors at both ends of the i-th beam can be obtained.

In some embodiments of the present application, the state vectors of the beam comprise an angular displacement of the beam, a bending moment of the beam, a linear displacement of the beam, and a shear force of the beam; a direction of the linear displacement of the beam is perpendicular to the beam; and the electronic device can construct the bending deformation formula based on the angular displacement of the beam, the bending moment of the beam, the linear displacement of the beam, the shear force of the beam, an equivalent elastic modulus, a moment of inertia, and a length of the beam so as to obtain the i-th beam matrix.

In the embodiment of the present application, the beam is perpendicular to the z-axis, and the linear displacement direction of the beam lies in the plane defined by the x-axis and y-axis. The deformation and force conditions of the beam in the x-axis direction are the same as those in the y-axis direction, and the linear displacement in both the x-axis and y-axis directions can be denoted by X.

The relationship between the state vectors at both ends of the i-th beam herein comprises the relationship between the internal force parameters $f$ at both ends of the i-th beam and the relationship between the deformation parameters $\varepsilon$ at both ends of the i-th beam. The relationship between the internal force parameters $f$ at both ends of the i-th

8

beam comprises the relationship between the shear force at the first end $Q^{1d}$ and the shear force at the second end $Q^{2d}$, as well as the relationship between the bending moment at the first end $M^{1d}$ and the bending moment at the second end $M^{2d}$. The relationship between the deformation parameters $\varepsilon$ at both ends of the i-th beam comprises the relationship between the linear displacement at the first end $X^{1d}$ and the linear displacement at the second end $X^{2d}$, as well as the relationship between the angular displacement at the first end $\theta^{1d}$ and the angular displacement at the second end $\theta^{2d}$.

In some embodiments of the present application, the relationship between the state vectors at both ends of the i-th beam comprises: the shear force at the first end of the beam $Q^{1d}$ is equal to the shear force at the second end of the beam $Q^{2d}$, as shown in Equation (23); a sum of the bending moment at the first end of the beam $M^{1d}$ and a product of the shear force at the first end of the beam $Q^{1d}$ and a length of the beam $l$ is equal to the bending moment at the second end of the beam $M^{2d}$, as shown in Equation (24); the linear displacement at the first end of the beam $X^{1d}$ is characterized through the linear displacement at the second end of the beam $X^{2d}$, the angular displacement at the first end of the beam $\theta^{1d}$, the length of the beam $l$, the bending moment at the second end of the beam $M^{2d}$, the shear force at the second end of the beam $Q^{2d}$, the equivalent elastic modulus $E$, and the moment of inertia $I$, as shown in Equation (25); and the angular displacement at the first end of the beam $\theta^{1d}$ is characterized through the angular displacement at the second end of the beam $\theta^{2d}$, the length of the beam $l$, the bending moment at the second end of the beam $M^{2d}$, the shear force at the second end of the beam $Q^{2d}$, the equivalent elastic modulus $E$, and the moment of inertia $I$, as shown in Equation (26).

In the embodiment of the present application,

$$X^{2d} = X^{1d} + \theta^{1d}l + \frac{M^{2d}l^2}{2EI} - \frac{Q^{2d}l^3}{3EI} \qquad \text{Equation (23)}$$

$$\theta^{2d} = \theta^{1d} + \frac{M^{2d}l}{EI} - \frac{Q^{2d}l^2}{2EI} \qquad \text{Equation (24)}$$

$$M^{2d} = M^{1d} + Q^{2d}l \qquad \text{Equation (25)}$$

$$Q^{2d} = Q^{1d} \qquad \text{Equation (26)}$$

Equation (27) can be obtained through substituting Equations (25) and (26) into Equation (23); and Equation (28) can be obtained through substituting Equations (25) and (26) into Equation (24).

$$X^{2d} = X^{1d} + \theta^{1d}l + \frac{M^{1d}l^2}{2EI} + \frac{Q^{1d}l^3}{6EI} \qquad \text{Equation (27)}$$

$$\theta^{2d} = \theta^{1d} + \frac{M^{1d}l}{EI} + \frac{Q^{1d}l^2}{2EI} \qquad \text{Equation (28)}$$

Equation (29) can be obtained through substituting Equation (26) into Equation (25).

$$M^{2d} = M^{1d} + Q^{1d}l \qquad \text{Equation (29)}$$

Based on Equations (27), (28), (29), and (26), the relationship between the state vectors at both ends of the i-th beam can be represented through the i-th beam matrix $B_i$, as shown in Equation (30).

$$Z_{bi}^{2d} = \left\{ \begin{matrix} f \\ \varepsilon \end{matrix} \right\}_{bi}^{2d} = \begin{bmatrix} B_{11} & B_{12} \\ B_{21} & B_{22} \end{bmatrix}_i \left\{ \begin{matrix} f \\ \varepsilon \end{matrix} \right\}_{bi}^{1d} = B_i Z_{bi}^{1d} \qquad \text{Equation (30)}$$

wherein

$$B_{12} = O_{4\times4} \qquad \text{Equation (31)}$$

$$B_{21} = \begin{bmatrix} \dfrac{l^2}{2EI} & \dfrac{l^3}{6EI} & 0 & 0 \\[2ex] \dfrac{l}{EI} & \dfrac{l^2}{2EI} & 0 & 0 \\[2ex] 0 & 0 & \dfrac{l^2}{2EI} & \dfrac{l^3}{6EI} \\[2ex] 0 & 0 & \dfrac{l}{EI} & \dfrac{l^2}{2EI} \end{bmatrix} \qquad \text{Equation (32)}$$

$$B_{11} = B_{22} = \begin{bmatrix} 1 & l & 0 & 0 \\ 0 & 1 & 0 & 0 \\ 0 & 0 & 1 & l \\ 0 & 0 & 0 & 1 \end{bmatrix} \qquad \text{Equation (33)}$$

S103. A state relationship at two ends of an i-th equivalent unit is determined according to the i-th disk matrix and the i-th beam matrix.

In the embodiment of the present application, the i-th equivalent unit is connected to the (i+1)-th equivalent unit, wherein the second end of the i-th disk is connected to the first end of the i-th beam, and the second end of the i-th beam is connected to the first end of the (i+1)-th disk. According to geometric compatibility and internal force equilibrium, the state vector at the second end of the i-th beam is equal to the state vector at the first end of the (i+1)-th disk, as shown in Equation (34).

$$\left\{ \begin{matrix} f \\ \varepsilon \end{matrix} \right\}_{bi}^{2d} = \left\{ \begin{matrix} f \\ \varepsilon \end{matrix} \right\}_{a(i+1)}^{1d} \qquad \text{Equation (34)}$$

In the embodiment of the present application, the electronic device can take a product of the i-th disk matrix and the i-th beam matrix as a i-th two-end matrix $U_i$; the i-th two-end matrix $U_i$ characterizes the state relationship at the two ends of the i-th equivalent unit; the two ends of the i-th equivalent unit comprise the first end of the i-th equivalent unit and the second end of the i-th equivalent unit; and the second end of the i-th equivalent unit serves as the first end of the (i+1)-th equivalent unit.

Based on Equations (19), (30), and (34), the state relationship between the first end of the i-th disk and the first end of the (i+1)-th disk can be determined, that is, the state relationship between the first end of the i-th equivalent unit and the first end of the (i+1)-th equivalent unit, which corresponds to the state relationship at both ends of the i-th equivalent unit, as shown in Equation (35).

$$\left\{ \begin{matrix} f \\ \varepsilon \end{matrix} \right\}_{i+1}^{1d} = U_i \left\{ \begin{matrix} f \\ \varepsilon \end{matrix} \right\}_{i}^{1d} = \begin{bmatrix} u_{11} & u_{12} \\ u_{21} & u_{22} \end{bmatrix}_i \left\{ \begin{matrix} f \\ \varepsilon \end{matrix} \right\}_{i}^{1d} \qquad \text{Equation (35)}$$

wherein

$$\begin{bmatrix} u_{11} & u_{12} \\ u_{21} & u_{22} \end{bmatrix}_i = \begin{bmatrix} B_{11} & B_{12} \\ B_{21} & B_{22} \end{bmatrix}_i \begin{bmatrix} D_{11} & D_{12} \\ D_{21} & D_{22} \end{bmatrix}_i \qquad \text{Equation (36)}$$

S104. State vectors of the N equivalent units are determined based on a Riccati transformation relationship and the state relationship at the two ends of the i-th equivalent unit; and the state vectors of the N equivalent units are configured to characterize the rotor state.

In the embodiment of the present application, the electronic device can introduce the Riccati transformation relationship at the i-th equivalent unit, and the device can determine the relationship between an i-th transfer matrix and an (i+1)-th transfer matrix according to the Riccati transformation relationship and the i-th two-end matrix. The transfer matrix herein is a function of the complex frequency, and in this way, the electronic device can solve each transfer matrix and determine the complex frequency corresponding to each transfer matrix, thereby determining the state of the rotor.

In some embodiments of the present application, the implementation of determining the state vectors of N equivalent units based on the Riccati transformation relationship and the state relationship at both ends of the i-th equivalent unit in S104, as shown in Fig. 7, can comprise S201 to S203.

S201. A transfer relationship between an (i+1)-th transfer matrix and an i-th transfer matrix is determined based on the Riccati transformation relationship and the i-th two-end matrix; and the transfer matrix is a function of the complex frequency.

In the embodiment of the present application, Equation (37) can be obtained through introducing the Riccati transformation relationship at the i-th equivalent unit.

$$f_i = S_i \varepsilon_i \qquad \text{Equation (37)}$$

$S_i$ is a function of the complex variable $s$ and represents a 4*4 matrix.

Equation (38) can be obtained through substituting Equation (37) into Equation (35). In Equation (38), the internal force parameters $f_i$ and the deformation parameters $\varepsilon_i$ of the i-th equivalent unit are eliminated.

$$f_{i+1} = \left(u_{11}S + u_{12}\right)_i \left(u_{21}S + u_{22}\right)_i^{-1} \varepsilon_{i+1} \qquad \text{Equation (38)}$$

Based on Equations (38) and (37), the recursive formula for the transfer matrix can be obtained, as shown in Equation (39), which characterizes the transfer relationship between the (i+1)-th transfer matrix and the i-th transfer matrix.

$$S_{i+1} = \left(u_{11}S + u_{12}\right)_i \left(u_{21}S + u_{22}\right)_i^{-1} \qquad \text{Equation (39)}$$

S202. N complex frequencies are obtained according to a boundary condition of the rotor and the transfer relationship; and each of the N complex frequencies is configured to determine the state vector of a corresponding unit, thereby obtaining the state vectors of the N units.

In the embodiment of the present application, the first transfer matrix is zero, and the electronic device can determine the N transfer matrices following the first transfer matrix successively based on the first transfer matrix, the transfer relationship, and the boundary conditions.

In the embodiment of the present application, the boundary conditions of the rotor comprise a first-end boundary condition and a second-end boundary condition; the first end of the rotor corresponds to the first end of the first equivalent unit, and the second end of the rotor corresponds to the second end of the N-th equivalent unit. The left-end boundary condition comprises that the internal force parameters of the first equivalent unit are zero, while the deformation parameters are nonzero. The right-end boundary condition comprises that the internal force parameters of the (N+1)-th equivalent unit are zero, while the deformation parameters are nonzero.

In the embodiment of the present application, based on the boundary conditions and the first transfer matrix equal to zero, the nontrivial solution of Equation (39) is required to satisfy the condition that the determinant of $S_{N+1}$ is zero, as shown in Equation (40).

$$\Delta_1 = \left|S\right|_{N+1} = 0 \qquad \text{Equation (40)}$$

In the embodiment of the present application, the residual curve exists a plurality of sign-alternating infinite-type singularities, which can cause the intervals of sign changes and the existence intervals of roots to not correspond one-to-one, leading to false roots or missing roots. Therefore, it is necessary to transform the sign-alternating infinite-type singularities in the residual curve into same-sign infinite-type singularities.

In some embodiment of the present application, a modulus of the transfer matrix of the (N+1)-th unit multiplied by a filtering expression is zero; the filtering expression is a product of N sub-filtering expressions; and the i-th sub-filtering expression of the N sub-filtering expressions is the modulus of the sum obtained through multiplying $u_{21}$ of the i-th two-end matrix by the i-th transfer matrix, and then adding $u_{22}$. Accordingly, the dynamic equation of the rotor can be obtained, as shown in Equation (41).

$$\Delta_p = \left|S\right|_{N+1} \prod_{i=1}^{N} sign\left(\left|u_{21}S + u_{22}\right|_i\right) = 0 \qquad \text{Equation (41)}$$

*sign* herein is the sign function. Equation (41) represents a complex polynomial, which can be solved through finding the roots of the polynomial.

In the embodiments of the present application, the process of obtaining Equation (41) can be implemented through programming. In some embodiments, the programming can adopt the parabolic method and be in the form of complex variables.

In the embodiments of the present application, the electronic device can determine each root based on Equation (41) through a plurality of iterations. The consecutive iterations for a specific root can be performed through finding the closest solution of a quadratic curve fitted to the last three points of the residual curve. When the difference between two consecutive values of a root is less than or equal to a preset convergence error, the root is considered to have converged to a certain value, which is taken as the solution.

In the embodiments of the present invention, before each root search, the electronic device can factor out any conjugate complex roots that have already been found from the polynomial, thereby reducing the search time and improving search efficiency.

In the embodiments of the present application, based on Equation (1), the complex frequency corresponding to each transfer matrix can be used to determine the state vector of the corresponding equivalent unit, thereby determining the state of the rotor.

The embodiments of the present application take into account the effects of support damping and support anisotropy on the rotor dynamic characteristics; thus, when predicting the rotor state, the prediction accuracy can be improved.

In the embodiments of the present application, since the dimension of the system matrix does not increase with the number of rotor degrees of freedom, the prediction process is simplified, thereby improving the efficiency of predicting the rotor state.

In the embodiments of the present application, after the electronic device determines the solution of Equation (41), that is, the complex frequency, the natural frequency $\omega$ and the damping index $\sigma$ of the rotor can be determined based on Equation (2).

Since for a disk in any equivalent unit, a supporting force generated by a bearing is taken into account, and the supporting force comprises an elastic force corresponding to a stiffness coefficient and a damping force corresponding to a damping coefficient; and accordingly, since the influence of the damping force on the rotor is taken into account, the accuracy of determining the rotor state is improved.

By way of example, the supporting stiffness of the bearing is $1*10^7$ N/m, and the damping is 50 Ns/m; and the first three bending natural frequencies of a high-speed motor rotor system calculated using the finite element method, as well as those obtained using the method in the embodiments of the present application, are shown in Table 1.

Table 1

| Natural Frequency | 1st Order | 2nd Order | 3rd Order |
|---|---|---|---|
| Finite Element Method (Hz) | 8643 | 10840 | 13972 |
| Embodiments of the Present Application (Hz) | 8977 | 11233 | 13435 |
| Relative Error | 3.86% | 3.62% | 3.84% |

As shown in Table 1, the relative error between the three-order natural frequencies calculated using the embodiments of the present application and those obtained by the finite element method is less than 4%.

Figs. 8a, 8b, and 8c are mode shape diagrams at three different time points obtained using the finite element method, whereas Figs. 8d, 8e, and 8f are mode shape diagrams at the same three time points obtained using the embodiments of the present application. Figs. 8d, 8e, and 8f illustrate the curves of dimensionless displacement versus axial length. Fig. 8d is the mode shape diagram obtained using the embodiments of the present application at the same time point as Fig. 8a; Fig. 8e is the mode shape diagram obtained using the embodiments of the present application at the same time point as Fig. 8b; and Fig. 8f is the mode shape diagram obtained using the embodiments of the present application at the same time point as Fig. 8c. As can be seen from the figures, the rotor shapes in the mode shape diagrams obtained using the embodiments of the present application are substantially consistent with those obtained by the finite element method.

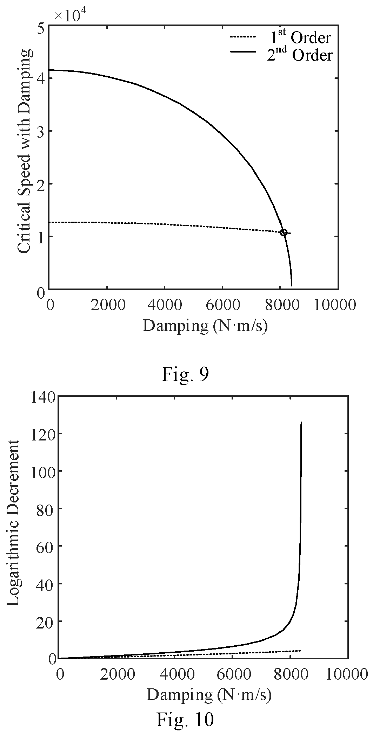

When the bearing stiffness is $1*10^7$ N/m, the curves of the first two-order critical speeds with damping versus damping of the rotor system are shown in Fig. 9. As shown in Fig. 9, when the damping is small, as the damping increases, the first-order critical speed with damping remains nearly unchanged, while the second-order critical speed with damping gradually decreases; and when the damping is large, as the damping increases, the first-order critical speed with damping decreases slowly, whereas the second-order critical speed with damping decreases rapidly. When the bearing stiffness is $1*10^7$ N/m, the curves of the logarithmic decrement corresponding to the first two-order critical speeds with damping of the rotor system versus damping are shown in Fig. 10. As can be seen from Fig. 10, the first-order logarithmic decrement increases slowly with damping, while the second-order logarithmic decrement increases slowly at first and then rises sharply as the damping increases. It can be seen that the bearing damping has a strong suppressive effect on the second-order critical speed with damping of the system, ultimately causing it to disappear. Compared to the second-order critical speed with damping, the bearing damping has a weaker suppressive effect on the first-order critical speed with damping of the system.

To validate the correctness of the analysis of the damping critical speed characteristics, the transient response of the rotor system is studied under two different bearing damping conditions. When the bearing stiffness is $1*10^7$ N/m, an imbalance of $1*10^{-5}$ Kgm is applied at the middle position of the rotor assembly along the axial direction. Under two bearing damping conditions of 50 Ns/m and 8200 Ns/m, respectively, the first two-order critical speeds with damping of the system and the corresponding logarithmic decrement are shown in Table 2.

Table 2

| Damping (N·s/m) | Critical Speed with Damping (r/min) | | Logarithmic Decrement | |
|---|---|---|---|---|
| | First Order | Second Order | First Order | Second Order |
| 50 | 12723 | 41493 | 0.021 | 0.037 |
| 8200 | 10697 | 8932 | 4.085 | 28.971 |

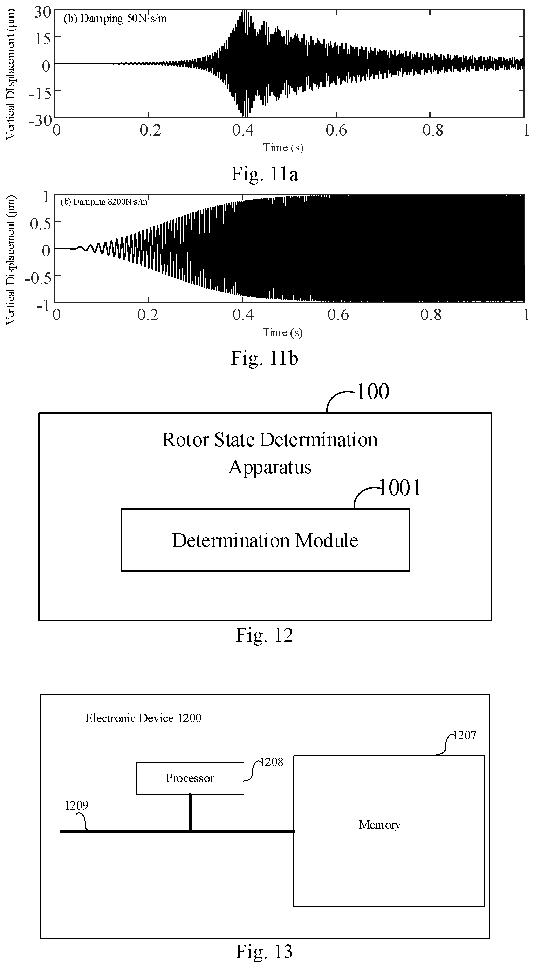

For these two different damping conditions, the rotor is accelerated from zero to 30,000 r/min according to the exponential law shown in Equation (42), and the transient response at the position of the imbalance during the first second of the acceleration process is shown in Fig. 11. Fig. 11a shows the variation trend of the vertical displacement over time for a damping of 50 Ns/m; and Fig. 11b shows the variation trend of the vertical displacement over time for a damping of 8200 Ns/m.

$$\Omega(t) = 30000(1 - e^{-1.5t}) \qquad \text{Equation (42)}$$

As can be seen from Table 2, when the damping is 50 Ns/m, only the first-order critical speed with damping of 12,723 r/min exists within the range up to 30,000 r/min, and the corresponding logarithmic decrement is very small, resulting in relatively severe rotor vibration. This is verified by the rotor response shown in Fig. 11a, in which only one obvious peak appears, and the rotational speed corresponding to this peak is the first-order critical speed with damping of the rotor system. When the damping is 8200 Ns/m, the first two-order critical speeds with damping exist within the range up to 30,000 r/min, and the corresponding logarithmic decrements are 4.085 and 28.971, respectively, both of which are much greater than 1, indicating that the vibration of the rotor system is effectively suppressed. Therefore, no obvious peak appears in the rotor response during the acceleration process, as shown in Fig. 11b.

Based on the above embodiments, the embodiments of the present application further provide an apparatus for determining a rotor state. As shown in Fig. 12, the apparatus 100 can comprise:

a determination module 1001, which is configured to determine an i-th disk matrix according to a force condition of the i-th disk; wherein the i-th disk matrix characterizes a relationship between state vectors at two ends of the i-th disk; the forces borne by the i-th disk comprise: a shear force, and a supporting force generated by the bearing in the equivalent unit to which the i-th disk pertains; N≥i≥1; and i is an integer; the determination module is further configured to determine an i-th beam matrix according to a bending deformation formula of the i-th beam; wherein the i-th beam matrix is configured to characterize a relationship between state vectors at two ends of the i-th beam; the determination module is further configured to determine a state relationship at two ends of an i-th equivalent unit according to the i-th disk matrix and the i-th beam matrix; and the determination module is further configured to determine state vectors of the N equivalent units based on a Riccati transformation relationship and the state relationship at the two ends of the i-th equivalent unit; wherein the state vectors of the N equivalent units are configured to characterize the rotor state.

In some embodiments, the state vectors of the disk comprise: a disk angular displacement, a disk bending moment, a disk linear displacement, and a disk shear force; the relationship between the state vectors at the two ends of the i-th disk comprises a first disk state relationship and a second disk state relationship; the determination module 1001 is further configured to determine the first disk state relationship according to the forces borne by the i-th disk; and the first disk state relationship characterizes a relationship among the disk linear displacement, the disk shear force at a first end, and the disk shear force at a second end; the determination module 1001 is further configured to determine the second disk state relationship according to moments of the i-th disk; wherein the second disk state relationship characterizes a relationship among the disk angular displacement, the disk bending moment at the first end, and the disk bending moment at the second end.

In some embodiments, the first disk state relationship comprises the first disk state relationship in a first direction and the first disk state relationship in a second direction; the first direction and the second direction are perpendicular to each other, and both the first direction and the second direction are perpendicular to the bearing of the rotor; the determination module 1001 is further configured to characterize the disk shear force at the first end in the first direction through the disk shear force at the second end in the first direction, the mass of the disk, a first stiffness parameter and a first damping parameter in the first direction affecting the first direction, a second stiffness parameter and a second damping parameter in the first direction affecting the second direction, the disk linear displacement in the first direction, the disk linear displacement in the second direction, and a complex frequency of the rotor; the determination module 1001 is further configured to characterize the disk shear force at the first end in the second direction through the disk shear force at the second end in the second direction, a third stiffness parameter and a third damping parameter in the second direction affecting the second direction, a fourth stiffness parameter and a fourth damping parameter in the second direction affecting the first direction, the disk linear displacement in the first direction, the disk linear displacement in the second direction, and the complex frequency of the rotor; and in the absence of the bearing in the equivalent unit, the first stiffness parameter, the second stiffness parameter, the third stiffness parameter, the fourth stiffness parameter, the first damping parameter, the second damping parameter, the third damping parameter, and the fourth damping parameter are all zero.

In some embodiments, the second disk state relationship comprises the second disk state relationship in a first direction and the second disk state relationship in a second direction; the first direction and the second direction are perpendicular to each other, and both the first direction and the second direction are perpendicular to the bearing of the rotor; the determination module 1001 is further configured to characterize the disk bending moment at the first end in the second direction through the disk bending moment at the second end in the second direction, a diametral moment of inertia, a polar moment of inertia, a spin speed, the disk angular displacement in the second direction, the disk angular displacement in the first direction, and a complex frequency of the rotor; and the determination module 1001 is further configured to characterize the disk bending moment at the first end in the first direction through the disk bending moment at the second end in the first direction, the diametral moment of inertia, the polar moment of inertia, the spin speed, the disk angular displacement in the first direction, the disk angular displacement in the second direction, and the complex frequency of the rotor.

In some embodiments, the state vectors of the beam comprise an angular displacement of the beam, a bending moment of the beam, a linear displacement of the beam, and a shear force of the beam; the direction of the linear displacement of the beam is perpendicular to the beam; and the determination module 1001 is further configured to construct the bending deformation formula based on the angular displacement of the beam, the bending moment of the beam, the linear displacement of the beam, the shear force of the beam, an equivalent elastic modulus, a moment of inertia, and a length of the beam, to obtain the i-th beam matrix.

In some embodiments, the relationship between the state vectors at both ends of the i-th beam comprises: the shear force at the first end of the beam is equal to the shear force at the second end of the beam; a sum of the bending moment at the first end of the beam and a product of the shear force at the first end of the beam and a length of the beam is equal to the bending moment at the second end of the beam; the linear displacement at the first end of the beam is characterized through the linear displacement at the second end of the beam, the angular displacement at the first end of the beam, the length of the beam, the bending moment at the second end of the beam, the shear force at the second end of the beam, the equivalent elastic modulus, and the moment of inertia; and the angular displacement at the first end of the beam is characterized through the angular displacement at the second end of the beam, the length of the beam, the bending moment at the second end of the beam, the shear force at the second end of the beam, the equivalent elastic modulus, and the moment of inertia.

In some embodiments, the determination module 1001 is further configured to take the product of the i-th disk matrix and the i-th beam matrix as a i-th two-end matrix; the i-th two-end matrix characterizes the state relationship at the two ends of the i-th equivalent unit; the two ends of the i-th equivalent unit comprise the first end of the i-th equivalent unit and the second end of the i-th equivalent unit; and the second end of the i-th equivalent unit serves as the first end of the (i+1)-th equivalent unit.

In some embodiments, the determination module 1001 is further configured to determine a transfer relationship between an (i+1)-th transfer matrix and an i-th transfer matrix based on the Riccati transformation relationship and the i-th two-end matrix; the transfer matrix is a function of the complex frequency; and

N complex frequencies is obtained according to a boundary condition of the rotor and the transfer relationship; and each of the N complex frequencies is configured to determine the state vector of a corresponding unit, thereby obtaining the state vectors of the N units.

In some embodiments, the determinant of the transfer matrix of the (N+1)-th unit is zero.

In some embodiments, the two-end matrix is a second-order matrix U; the modulus of the transfer matrix of the (N+1)-th unit multiplied by a filtering expression is zero; the filtering expression is a product of N sub-filtering expressions; and the i-th sub-filtering expression of the N sub-filtering expressions is the modulus of the sum obtained through multiplying u21 of the i-th two-end matrix by the i-th transfer matrix, and then adding u22 of the i-th two-end matrix.

Fig. 13 is a structural diagram of an electronic device in the embodiment of the present application. The electronic device 1200 comprises a memory 1207, a processor 1208, and a computer program stored on the memory 1207 and executable on the processor 1208. The processor 1208 is configured to execute the computer program to perform the above method as described in the foregoing embodiments.

The slave node 1200 further comprises a bus system 1209; and the components within the slave node 1200 are coupled to each other through the bus system 1209. It can be understood that the bus system 1209 is configured to enable communication between these components. In addition to a data bus, the bus system 1209 also comprises a power bus, a control bus, and a state signal bus.

The memory in the embodiments of the present application can be a volatile memory or a non-volatile memory, or can comprise both volatile and non-volatile memories. The non-volatile memory can be a read-only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, an optical disk, or a compact disc read-only memory (CD-ROM). The volatile memory can be a random access memory (RAM), which can serve as an external high-speed cache. By way of example but not limitation, various types of RAM can be used, such as static random access memory (SRAM), synchronous static random access memory (SSRAM), dynamic random access memory (DRAM), synchronous dynamic random access memory (SDRAM), double data rate synchronous dynamic random access memory (DDR SDRAM), enhanced synchronous dynamic random access memory (ESDRAM), SyncLink dynamic random access memory (SLDRAM), and direct Rambus random access memory (DR RAM). The memory described in the embodiments of the present application is intended to comprise, but is not limited to, the types mentioned above and any other suitable types of memory.

The methods disclosed in the above embodiments can be applied in a processor or implemented by a processor. The processor can be an integrated circuit chip with the capability to process signals. In the implementation process, the steps of the above methods can be completed by integrated logic circuits of hardware in the processor or by instructions in a software form. The processor can be a general-purpose processor, a DSP, or other programmable logic devices, discrete gate or transistor logic devices, discrete hardware components, and the like. The processor can implement or execute the methods, steps, and logic blocks disclosed in the embodiments of the present application. The general-purpose processor can be a microprocessor or any conventional processor. In conjunction with the steps of the methods disclosed in the embodiments of the present application, the steps can be directly performed by a hardware-based decoding processor, or executed by a combination of hardware and software modules within the decoding processor. The software modules can reside in a storage medium, and the storage medium is located in the memory. The processor reads the information from the memory and, in combination with its hardware, performs the steps of the aforementioned methods.

The embodiments of the present application provide a computer-readable storage medium, on which a computer program is stored. When the computer program is executed by a first processor, it implements the steps of the communication method on the slave node side; when executed by a second processor, it implements the steps of the communication method on the master node side.

In the embodiments provided in the present application, it should be understood that the disclosed devices and methods can be implemented in other manners. The device embodiments described above are merely exemplary. For example, the division of modules is only a logical functional division. In actual implementation, other division approaches can be used, such as: a plurality of modules or components can be combined, or integrated into another system, or some features can be omitted or not executed. In addition, the couplings, or direct couplings, or communication connections between the various components shown or discussed can be indirect couplings or communication connections through certain interfaces, devices, or modules, and can be electrical, mechanical, or in other forms.

The above descriptions are merely embodiments of the present application and are not intended to limit the protection scope of the present application. Any modifications, equivalent replacements and improvements made within the spirit and scope of the present application shall be comprised within the protection scope of the present invention.

**Claims**

**1.** A method for determining a rotor state, wherein the rotor comprises N equivalent units; each of the equivalent units comprises a disk and a beam; at least one of the equivalent units comprises a bearing; $N \geq 2$; and N is a positive integer; and the method comprises:

determining an i-th disk matrix according to a force condition of the i-th disk; wherein the i-th disk matrix characterizes a relationship between state vectors at two ends of the i-th disk; the forces borne by the i-th disk comprise: a shear force, and a supporting force generated by the bearing in the equivalent unit to which the i-th disk pertains; $N \geq i \geq 1$; and i is an integer;

determining an i-th beam matrix according to a bending deformation formula of the i-th beam; wherein the i-th beam matrix is configured to characterize a relationship between state vectors at two ends of the i-th beam;

determining a state relationship at two ends of an i-th equivalent unit according to the i-th disk matrix and the i-th beam matrix; and

determining state vectors of the N equivalent units based on a Riccati transformation relationship and the state relationship at the two ends of the i-th equivalent unit; wherein the state vectors of the N equivalent units are configured to characterize the rotor state.

2. The method according to claim 1, wherein the state vectors of the disk comprise: a disk angular displacement, a disk bending moment, a disk linear displacement, and a disk shear force; the relationship between the state vectors at the two ends of the i-th disk comprises a first disk state relationship and a second disk state relationship; and the step of determining the i-th disk matrix according to the force condition of the i-th disk comprises:

determining the first disk state relationship according to the forces borne by the i-th disk; wherein the first disk state relationship characterizes a relationship among the disk linear displacement, the disk shear force at a first end, and the disk shear force at a second end;

determining the second disk state relationship according to moments of the i-th disk; wherein the second disk state relationship characterizes a relationship among the disk angular displacement, the disk bending moment at the first end, and the disk bending moment at the second end.

3. The method according to claim 2, wherein the first disk state relationship comprises the first disk state relationship in a first direction and the first disk state relationship in a second direction; the first direction and the second direction are perpendicular to each other, and both the first direction and the second direction are perpendicular to the bearing of the rotor;

the step of determining the first disk state relationship according to the forces borne by the i-th disk comprises:

characterizing the disk shear force at the first end in the first direction through the disk shear force at the second end in the first direction, the mass of the disk, a first stiffness parameter and a first damping parameter in the first direction affecting the first direction, a second stiffness parameter and a second damping parameter in the first direction affecting the second direction, the disk linear displacement in the first direction, the disk linear displacement in the second direction, and a complex frequency of the rotor;

characterizing the disk shear force at the first end in the second direction through the disk shear force at the second end in the second direction, a third stiffness parameter and a third damping parameter in the second direction affecting the second direction, a fourth stiffness parameter and a fourth damping parameter in the second direction affecting the first direction, the disk linear displacement in the first direction, the disk linear displacement in the second direction, and the complex frequency of the rotor; and

setting the first stiffness parameter, the second stiffness parameter, the third stiffness parameter, the fourth stiffness parameter, the first damping parameter, the second damping parameter, the third damping parameter, and the fourth damping parameter to zero when the bearing is absent from the equivalent unit.

4. The method according to claim 2, wherein the second disk state relationship comprises the second disk state relationship in a first direction and the second disk state relationship in a second direction; the first direction and the second direction are perpendicular to each other, and both the first direction and the second direction are perpendicular to the bearing of the rotor;

the step of determining the second disk state relationship according to the moment of the i-th disk comprises:

characterizing the disk bending moment at the first end in the second direction through the disk bending moment at the second end in the second direction, a diametral moment of inertia, a polar moment of inertia, a spin speed, the disk angular displacement in the second direction, the disk angular displacement in the first direction, and a complex frequency of the rotor; and

characterizing the disk bending moment at the first end in the first direction through the disk bending moment at the second end in the first direction, the diametral moment of inertia, the polar moment of inertia, the spin speed, the disk angular displacement in the first direction, the disk angular displacement in the second direction, and the complex frequency of the rotor.

5. The method according to claim 1, wherein the state vectors of the beam comprise an angular displacement of the beam, a bending moment of the beam, a linear displacement of the beam, and a shear force of the beam; a direction of the linear displacement of the beam is perpendicular to the beam; and

the step of determining the i-th beam matrix according to a bending deformation formula of an i-th massless beam comprises:

constructing the bending deformation formula based on the angular displacement of the beam, the bending moment of the beam, the linear displacement of the beam, the shear force of the beam, an equivalent elastic modulus, a moment of inertia, and a length of the beam, to obtain the i-th beam matrix.

6. The method according to claim 5, wherein the relationship between the state vectors at the two ends of the i-th beam comprises:

the shear force at the first end of the beam is identical to the shear force at the second end of the beam;
a sum of the bending moment at the first end of the beam and a product of the shear force at the first end of the beam and the length of the beam is equal to the bending moment at the second end of the beam;
the linear displacement at the first end of the beam is characterized through the linear displacement at the second end of the beam, the angular displacement at the first end of the beam, the length of the beam, the bending moment at the second end of the beam, the shear force at the second end of the beam, the equivalent elastic modulus, and the moment of inertia; and
the angular displacement at the first end of the beam is characterized through the angular displacement at the second end of the beam, the length of the beam, the bending moment at the second end of the beam, the shear force at the second end of the beam, the equivalent elastic modulus, and the moment of inertia.

7. The method according to any one of claims 1 to 6, wherein the step of determining the state relationship at the two ends of the i-th equivalent unit according to the i-th disk matrix and the i-th beam matrix comprises:

taking a product of the i-th disk matrix and the i-th beam matrix as an i-th two-end matrix; wherein the i-th two-end matrix characterizes the state relationship at the two ends of the i-th equivalent unit; the two ends of the i-th equivalent unit comprise the first end of the i-th equivalent unit and the second end of the i-th equivalent unit; and the second end of the i-th equivalent unit serves as the first end of the (i+1)-th equivalent unit.

8. The method according to claim 7, wherein step of determining the state vectors of the N equivalent units based on the Riccati transformation relationship and an i-th transfer state relationship comprises:

determining a transfer relationship between an (i+1)-th transfer matrix and an i-th transfer matrix based on the Riccati transformation relationship and the i-th two-end matrix; wherein the transfer matrix is a function of the complex frequency; and
obtaining N complex frequencies according to a boundary condition of the rotor and the transfer relationship; wherein each of the N complex frequencies is configured to determine the state vector of a corresponding unit, thereby obtaining the state vectors of the N units.

9. The method according to claim 8, wherein a determinant of the transfer matrix of the (N+1)-th unit is zero.

10. The method according to claim 8, wherein the two-end matrix is a second-order matrix U; a modulus of the transfer matrix of the (N+1)-th unit multiplied by a filtering expression is zero; the filtering expression is a product of N sub-filtering expressions; and the i-th sub-filtering expression of the N sub-filtering expressions is the modulus of the sum of u22 and the product of u21 of the i-th two-end matrix and the i-th transfer matrix.

11. An apparatus for determining a rotor state, wherein the rotor comprises N equivalent units; each of the equivalent units comprises a disk and a beam; at least one of the equivalent units comprises a bearing.; $N \geq 2$, and N is a positive integer; and the apparatus comprises:

a determination module, which is configured to determine an i-th disk matrix according to a force condition of the i-th disk; wherein the i-th disk matrix characterizes a relationship between state vectors at two ends of the i-th disk; the forces borne by the i-th disk comprise: a shear force, and a supporting force generated by the bearing in the equivalent unit to which the i-th disk pertains; $N \geq i \geq 1$, and i is an integer; the determination module is further configured to determine an i-th beam matrix according to a bending deformation formula of the i-th beam; wherein the i-th beam matrix is configured to characterize a relationship between state vectors at two ends of the i-th beam; the determination module is further configured to determine a state relationship at two ends of an i-th equivalent unit according to the i-th disk matrix and the i-th beam matrix; and the determination module is further configured to determine state vectors of the N equivalent units based on a Riccati transformation relationship and the state relationship at the two ends of the i-th equivalent unit; wherein the state vectors of the N equivalent units are configured to characterize the rotor state.

**12.** An electronic device, wherein the electronic device comprises:

a memory, which is configured to store a computer program; and
a processor, which is configured to execute the method for determining the rotor state according to any one of claims 1 to 10 when the computer program is executed.

**13.** A computer storage medium, wherein executable instructions are stored thereon and are configured to implement the method for determining the rotor state according to any one of claims 1 to 10 when executed by a processor.

determining an i-th disk matrix according to a force condition of the i-th disk; wherein the i-th disk matrix characterizes a relationship between state vectors at two ends of the i-th disk; the forces borne by the i-th disk comprise: a shear force, and a supporting force generated by a bearing in an equivalent unit to which the i-th disk pertains; $N \geq i \geq 1$; and i is an integer — S101

determining an i-th beam matrix according to a bending deformation formula of the i-th massless beam; wherein the i-th beam matrix is configured to characterize a relationship between state vectors at two ends of the i-th beam — S102

determining a state relationship at two ends of an i-th equivalent unit according to the i-th disk matrix and the i-th beam matrix; — S103

determining state vectors of the N equivalent units based on a Riccati transformation relationship and the state relationship at the two ends of the i-th equivalent unit; wherein the state vectors of the N equivalent units are configured to characterize the rotor state — S104

Fig. 1

Fig. 2

Fig. 3

Fig. 4

Fig. 5

Fig. 6a

Fig. 6b

Determining a transfer relationship between an (i+1)-th transfer matrix and an i-th transfer matrix based on the Riccati transformation relationship and the i-th two-end matrix; wherein the transfer matrix is a function of the complex frequency — S201

Obtaining N complex frequencies according to a boundary condition of the rotor and the transfer relationship; wherein each of the N complex frequencies is configured to determine the state vector of a corresponding unit, thereby obtaining the state vectors of the N units — S202

Fig. 7

Fig. 8a          Fig. 8b          Fig. 8c

Fig. 8d          Fig. 8e          Fig. 8f

Fig. 9

Fig. 10

Fig. 11a

Fig. 11b

Fig. 12

Fig. 13

## INTERNATIONAL SEARCH REPORT

| International application No. |
| --- |
| **PCT/CN2024/102589** |

| A. | CLASSIFICATION OF SUBJECT MATTER |
| --- | --- |

G06F18/213(2023.01)i;  G01M13/00(2019.01)i;  G01M13/04(2019.01)i;  G01M13/045(2019.01)i

According to International Patent Classification (IPC) or to both national classification and IPC

| B. | FIELDS SEARCHED |
| --- | --- |

Minimum documentation searched (classification system followed by classification symbols)

    IPC:G06F,G01M

Documentation searched other than minimum documentation to the extent that such documents are included in the fields searched

Electronic data base consulted during the international search (name of data base and, where practicable, search terms used)

    VEN, CNABS, CNTXT, WOTXT, EPTXT, USTXT, CNKI, IEEE: 电机, 电动机, 马达, 转子, 等效单元, 模型, 圆盘, 梁, 矩阵, 转子状态, 转子模态, motor, rotor, equivalent cell, model, disk, beam, matrix, rotor state, rotor mode

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117390422 A (DONGFENG MOTOR GROUP CO., LTD.) 12 January 2024 (2024-01-12) claims 1-13, description, paragraphs [0035]-[0175], and figures 1-13 | 1-13 |
| A | CN 115758600 A (DONGFENG MOTOR GROUP CO., LTD.) 07 March 2023 (2023-03-07) description, paragraphs [0053]-[0147], and figures 1-9 | 1-13 |
| A | CN 112541239 A (RESEARCH INSTITUTE FOR NATIONAL DEFENSE ENGINEERING OF ACADEMY OF MILITARY SCIENCE OF PLA) 23 March 2021 (2021-03-23) entire document | 1-13 |
| A | CN 113268908 A (CHINA AERO ENGINE RESEARCH INSTITUTE) 17 August 2021 (2021-08-17) entire document | 1-13 |
| A | CN 114580121 A (XI'AN AEROSPACE PROPULSION INSTITUTE) 03 June 2022 (2022-06-03) entire document | 1-13 |
| A | CN 114611358 A (TSINGHUA UNIVERSITY) 10 June 2022 (2022-06-10) entire document | 1-13 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 September 2024** | **23 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/102589** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 115809551 A (ZHEJIANG LINGSHENG POWER TECHNOLOGY CO., LTD. et al.) 17 March 2023 (2023-03-17)<br>entire document | 1-13 |
| A | JP 2001268981 A (EBARA CORP. et al.) 28 September 2001 (2001-09-28)<br>entire document | 1-13 |
| A | WO 2023000376 A1 (NANJING UNIVERSITY OF AERONAUTICS AND ASTRONAUTICS et al.) 26 January 2023 (2023-01-26)<br>entire document | 1-13 |

Form PCT/ISA/210 (second sheet) (July 2022)

**INTERNATIONAL SEARCH REPORT**
Information on patent family members

International application No.

**PCT/CN2024/102589**

| Patent document cited in search report | | | Publication date (day/month/year) | Patent family member(s) | | | Publication date (day/month/year) |
|---|---|---|---|---|---|---|---|
| CN | 117390422 | A | 12 January 2024 | None | | | |
| CN | 115758600 | A | 07 March 2023 | None | | | |
| CN | 112541239 | A | 23 March 2021 | None | | | |
| CN | 113268908 | A | 17 August 2021 | None | | | |
| CN | 114580121 | A | 03 June 2022 | None | | | |
| CN | 114611358 | A | 10 June 2022 | None | | | |
| CN | 115809551 | A | 17 March 2023 | None | | | |
| JP | 2001268981 | A | 28 September 2001 | None | | | |
| WO | 2023000376 | A1 | 26 January 2023 | CN | 113609609 | A | 05 November 2021 |

Form PCT/ISA/210 (patent family annex) (July 2022)

**EP 4 773 026 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311196883